# EUROPÄISCHE PATENTSCHRIFT

(11) **EP 0 385 068 B1**
(45) Veröffentlichungstag und Bekanntmachung des Hinweises auf die Patenterteilung: **27.01.1993**
(21) Anmeldenummer: 90100496.0
(22) Anmeldetag: 11.01.1990
(51) Int. Cl.: B65D 85/672, G11B 23/027

(54) **Sammelverpackung für auf Kerne gewickelte Magnetbänder**
Package for magnetic tapes wound onto cores
Emballage pour bandes magnétiques enroulées sur des noyaux

(30) Priorität: 24.01.1989 DE 8900709 U
(43) Veröffentlichungstag der Anmeldung: 05.09.1990
(73) Patentinhaber: BASF Magnetics GmbH, 68165 Mannheim (DE)
(72) Erfinder: Brandstetter, Hermann, D-8000 München 70 (DE); Toral, José, D-8000 München 70 (DE); Liepold, August, D-8000 München 70 (DE)
(74) Vertreter: Münch, Volker, Dr.

(56) Entgegenhaltungen:
- DE-A- 2 655 254
- DE-U- 8 716 579
- GB-A- 2 031 834

## Beschreibung

Die Neuerung bezieht sich auf eine Verpackung für mehrere auf flanschlose mit inneren Bohrungen versehene Wickelkerne aufgespulte bandförmige Aufzeichnungsträger (sogenannte Pancakes), bestehend aus tellerförmigen Kunststoff-Paletten, welche die äußeren Pancakes schützen sowie gegebenenfalls in der Achsmitte hochgezogene Naben, deren Durchmesser dem lichten Innendurchmesser der Bohrungen der Wickelkerne entspricht und wobei die Verpackung durch eine darüberziehbare Schrumpffolie verschließbar ist.

Weltweit werden von den Magnetband-Fabriken sogenannte Rohwarenverpackungen verkauft. In diesen ist das Magnetband auf Kerne, beispielsweise flanschlose Wickelkerne (entweder die sogenannten NAB-Kerne oder stapelbare Wickelkerne gemäß DE-A- 24 48 853 oder andere) aufgewickelt. Diese Pancakes werden zur Zeit entweder einzeln verpackt oder in Sammelgebinden geschrumpft oder durch verschiedene Kartonagen gehalten. Eine derartige Verpackung ist aus der DE-A- 26 55 254 bekannt.

Der Nachteil der oben geschilderten Sammelverpackung besteht darin, daß die Magnetbänder, obwohl die äußeren Lagen durch Styroporteller geschützt sind und außerdem die aufeinandergestapelten Pancakes durch eine Schrumpffolie verschlossen werden, doch nicht optimal geschützt sind. Folgende Fehler können bei der Lagerung beziehungsweise beim Transport auftreten:
- Durch die geschrumpfte Verpackung stehen die äußeren Ränder unter Spannung und üben auf die in ihnen enthaltenen Magnetbänder einen Druck aus, so daß die Magnetbandwickel eine tellerförmige Verformung erleiden können.
- Bei liegendem Transport, das heißt, waagrecht liegendem Bandwickel beziehungsweise Wickelkern, können Stufenbildung beziehungsweise Wickelabrutscher entstehen und so das Magnetband beschädigen.

Aus den DE-U- 87 16 579, DE-U- 87 16 580 und DE-U- 88 03 062 sind Sammelverpackungen der genannten gattungsmäßigen Art bekannt, bei denen wiederverwendbare verspannbare oder verschraubbare Kernstützen die oben aufgeführten Nachteile vermeiden helfen. Dies bedingt jedoch Teilevielfalt und daraus resultierende Preisnachteile für diese Art von Verpackung.

Aus der US-A- 4 708 246 ist eine Sammelverpackung für Pancakes bekannt, bei der die Zwischenlagen zwischen den Pancakes deren Form angepaßt sind. Dies bedingt jedoch einen großen Verbrauch an Verpackungsmaterial. Ähnliche Nachteile hat eine Sammelverpackung für aufeinandergestapelte zerbrechliche Gegenstände gemäß US-A- 2 776 772.

Daher bestand die Aufgabe, eine Sammelverpackung zu finden, die nicht die oben genannten Nachteile aufweist, sondern einen optimalen Schutz der Pancakes gewährleistet und die zudem einfach zu handhaben ist und preisgünstig herzustellen und zu verwenden ist.

Neuerungsgemäß wurde die Aufgabe gelöst mit einer Verpackung mit den im kennzeichnenden Teil des Anspruchs 1 genannten Merkmalen. Weitere Details der beanspruchten Verpackung gehen aus den Unteransprüchen hervor.

Nachstehend wird eine bevorzugte Ausführung der Neuerung anhand der Zeichnungen näher erläutert und zwar zeigt
Figur 1 einen Querschnitt durch eine neuerungsgemäße Kunststoff-Palette
Figur 2 eine Draufsicht auf einen Teilausschnitt der Innenseite der neuerungsgemäßen Kunststoff-Palette
Figur 3 zwei komplette geschrumpfte Sammelverpackungen gemäß der Neuerung mit Inhalt in stehendem Transportzustand von der Seite gesehen.

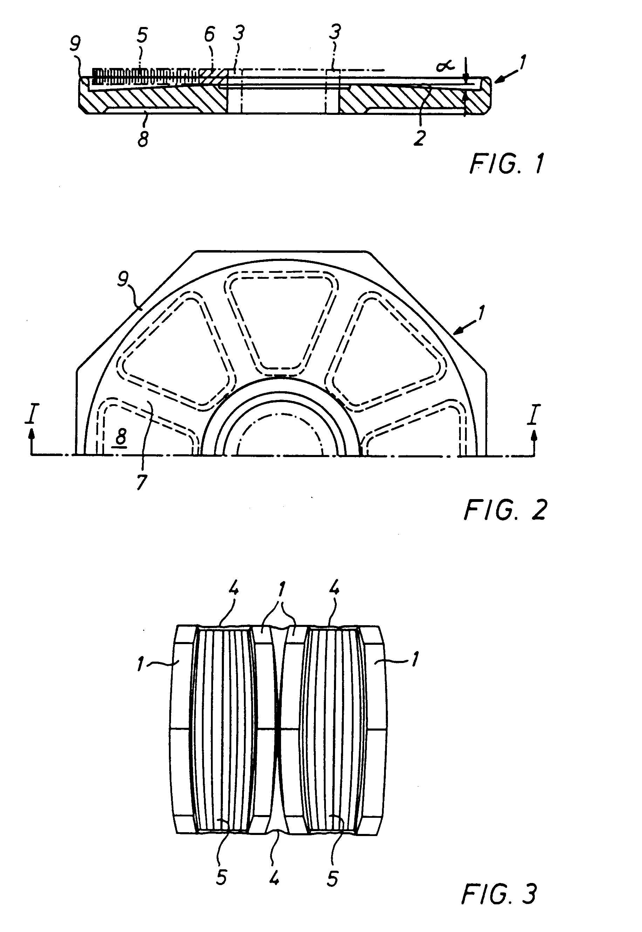

Wie in Figur 1 gezeichnet, besitzt die Kunststoff-Palette (1) an der Innenfläche (2) eine im wesentlichen plane tellerförmige Auflage mit Randbord (9) und gegebenenfalls mit einer in der Achsmitte hochgezogenen kreisförmigen Nabe (3), deren Durchmesser dem inneren Durchmesser der Bohrungen und deren Höhe etwa der Gesamthöhe eines Wickelkerns (6) entspricht. Die Abmessungen der Wickelkerne, beispielsweise NAB- beziehungsweise NARTB-Kerne, sind, wie jedem Fachmann auf dem magnetischen Gebiet bekannt, genormt.

Im Bereich des Wickelkerns kann die Innenfläche der Palette eine oder mehrere Stufen haben, die weitere Ausgestaltung der Innenfläche ist vorzugsweise so wie in der bereits erwähnten DE-A- 26 55 254 beschrieben. Die durch die eben genannten Stufen gebildeten Ausnehmungen haben den Zweck, die axialen Verformungen der Wickelkerne gemäß der DE 24 48 853 aufzunehmen.

Neuerungsgemäß ist die Innenfläche (2) im Bereich des Bandwickels (5) des auf den Kern (6) aufgewickelten Magnetbandes konusförmig nach außen abfallend abgeschrägt. Dabei ist der Konuswinkel α so bemessen, daß im fertig verpackten durch Schrumpffolie verschlossenen Zustand der Sammelverpackung mehrerer aufeinandergestapelter Pancakes die beiden den Innenflächen der Palette (2) zugekehrten Wickelflächen über den gesamten Wickelbereich (5) unter gleichmäßigem leichten Druck anliegen. Da die Schrumpffolie (4) einen Druck auf die Peripherie der Sammelverpackung ausübt, wird diese, wie in Figur 3 dargestellt, verbogen. Der Konuswinkel kann je nach Schrumpfungsdruck der Folie und je nach Dicke der Palettenteller zwischen 1 bis 10° betragen.

Die Außenfläche der beispielsweise aus geschäumtem Polystyrol bestehenden Palette ist in Figur 2 beispielhaft dargestellt. Demgemäß können speichenförmige Rippen (7), die sich auch über den Außen- und Innenumfang des Tellers erstrecken, vorhanden sein, zwischen denen Vertiefungen (8) angeordnet sind. Der Außenumfang des Palettentellers kann kreisförmig, bevorzugt aber polygon beispielsweise achteckig sein.

Bei einem besonderen Ausführungsbeispiel wird ein 3,81 mm breites Magnetband auf flanschlose stapelbare und miteinander verriegelbare Wickelkerne gemäß DE-A-24 48 853 mit einer Wickelflächenbreite von 3,90 mm aufgewickelt. Der Durchmesser der Pancakes beträgt im aufgewikkelten Zustand 295 mm. Jeweils 15 Pancakes werden auf eine Styroporpalette mit einer Dicke von etwa 20 mm aufgelegt, deren Innenfläche im Wickelbereich unter einem Konuswinkel von α = 3° abgeschrägt ist. Im gestapelten Zustand sind also die Wickelflächen der Bandwickel (5) geringfügig beabstandet. Darauf wird eine cirka 1 mm dicke Kartonscheibe gelegt, dann werden darauf weitere 15 Pancakes gestapelt und mit einer weiteren neuerungsgemäßen Kunststoff-Palette (1) bedeckt. Durch die Bohrung der aufeinandergestapelten Wickelkerne wird eine Papphülse gesteckt. Nun wird die Verpackung durch eine 50 µm dicke Polyethylenterephthalat-Folie verschlossen und in einem Ofen wie aus dem Stand der Technik bekannt, verschrumpft.

In einem Vergleichsbeispiel wurde eine gleichartige Sammelverpackung von 2 x 15 Pancakes aufgebaut und unter exakt gleichen Bedingungen verschrumpft. Der einzige Unterschied bestand darin, daß die Innenflächen der Paletten nicht konusförmig abgeschrägt, sondern planparallel zu den Außenflächen waren. Nach zwei Wochen Lagerung unter gleichzeitigem mehrfachen Transport unter normalen Klimabedingungen der auf einer Polygonfläche der Palette stehenden geschrumpften Verpackung wurde diese geöffnet und der Wickelzustand der beiden äußersten Pancakes vermessen. Dabei hatten die Pancakes, die vorher in der neuerungsgemäßen Verpackung gelagert waren, im Außenbereich verglichen mit dem Innenbereich eine axiale Verschiebung ("Tellerwert") von knapp 0,3 mm, während die Pancakes in der konventionellen Verpackung einen Tellerwert von 1,5 mm ergaben. Bei Klimalagerung (Hitze, Kälte) waren die Unterschiede teilweise noch beträchtlich größer.

Die durch die Neuerung herbeigeführten Vorteile lassen sich wie folgt zusammenfassen:
- Reduzierung des Drucks nach dem Schrumpfvorgang der Verpackung auf die äußeren Pancakes, dadurch Verminderung der Gefahr der Tellerbildung
- Ausübung eines über den ganzen Wickel gleichmäßig verteilten leichten Andrucks auf die äußeren Pancakes nach dem Schrumpfvorgang, dadurch Reduzierung der Gefahr, daß sich stufige Wickel bilden
- Verstärkter Andruck im Kernbereich und entsprechende Entlastung im peripheren Bereich der Verpackung
- leicht konvexe Formgebung der Außenflächen der Styroporteller durch das Einschrumpfen. Dadurch werden Stöße und Berührungen der stehend gestapelten Gebinde bei Lagerung und Transport lediglich auf den Kernbereich ausgeübt.

## Patentansprüche

1. Verpackung für einen Stapelaus mehreren Band wickeln bandförmiger Aufzeichnungsträger (sogenannte Pancakes), die auf flanschlose mit inneren Bohrungen versehene Wickelkerne (6) aufgespult sind, wobei die Verpackung tellerförmige Kunststoff-Paletten (1), welche die äußeren, d.h. endseitigen, Pancakes des Stapels schützen, sowie gegebenenfalls in der Achsmitte der Paletten hochgezogene Naben (3) umfaßt, deren Durchmesser dem lichten Innendurchmesser der Bohrungen der Wickelkerne entspricht und wobei die Verpackung durch eine darüberziehbare Schrumpffolie (4) verschließbar ist, dadurch gekennzeichnet, daß die Innenflächen (2) der Kunststoff-Paletten (1) zumindest im gesamten Bereich der Bandwickel (5) der Pancakes konusförmig nach außen abfallend abgeschrägt sind.

2. Verpackung nach Anspruch 1, dadurch gekennzeichnet, daß der Konuswinkel α so dimensioniert ist, daß bei mit der Schrumpffolie (4) geschrumpfter Verpackung die Innenflächen (2) der Kunststoff-Paletten über den gesamten Bereich des Bandwickels (5) an den äußeren Pancakes gleichmäßig anliegen.

3. Verpackung nach den Ansprüchen 1 bis 2, dadurch gekennzeichnet, daß der Konuswinkel α in der Größenordnung von 1 bis 10° liegt.

4. Verpackung nach den Ansprüchen 1 bis 3, dadurch gekennzeichnet, daß die Wickelkerne (6) gegen Verdrehen durch beidseitige axiale Verformungen geschützte stapelbare Kerne sind.

5. Verpackung nach den Ansprüchen 1 bis 4, dadurch gekennzeichnet, daß die Kunststoff-Paletten (1) aus geschäumtem Polystyrol bestehen und an ihrer Außenseite mit speichenförmigen Versteifungen (7) ausgestaltet sind, zwischen denen sich Vertiefungen (8) befinden.

## Claims

1. A pack for a stack of a plurality of tape rolls of recording media in tape form (known as pancakes), which are wound up on flangeless hubs (6) provided with inner bores, the pack comprising plate-shaped plastic pallets (1), which protect the outer pancakes, ie. those at the ends, of the stack, as well as possibly bosses (3) drawn up in the axial center of the pallets, the diameter of which bosses corresponds to the clear inside diameter of the bores of the hubs and the pack being sealable by a shrink film (4) which can be drawn over it, wherein the inner surfaces (2) of the plastic pallets (1) are beveled conically downward in the outward direction, at least in the entire region of the tape rolls (5) of the pancakes.

2. The pack as claimed in claim 1, wherein the cone angle α is dimensioned such that, when the pack has the shrink film (4) shrunk on it, the inner surfaces (2) of the plastic pallets bear evenly against the outer pancakes over the entire region of the tape roll (5).

3. The pack as claimed in claim 1 or 2, wherein the cone angle α is of the order of magnitude of 1 to 10°.

4. The pack as claimed in any of claims 1 to 3, wherein the hubs (6) are stackable hubs protected against twisting by axial deformations on both sides.

5. The pack as claimed in any of claims 1 to 4, wherein the plastic pallets (1) consist of expanded polystyrene and are designed on their outer side with spoke-shaped reinforcements (7), between which there are depressions (8).

## Revendications

1. Emballage pour un empilement composé de plusieurs bobines de bande, qui sont des supports d'enregistrement se présentant sous forme de bande (ce que l'on appelle des galettes, ou bobines plates), enroulés sur des axes de bobinage (6) sans flasque, pourvus d'alésages intérieurs, l'emballage étant formé en palettes en matière plastique (1) en forme de disque, qui protègent les galettes placées en faces d'extrémité extérieures de l'empilement, ainsi que comprenant, le cas échéant, un moyeu relevé (3), placé au centre des palettes et dont le diamètre correspond au diamètre intérieur libre des alésages des axes de bobinage et l'emballage étant susceptible d'être obturé au moyen d'une feuille rétractable (4) pouvant être étirée par dessus, caractérisé en ce que les faces intérieures (2) des palettes en matière plastique (1) sont chanfreinées, en tombant de façon conique vers l'extérieur, au moins dans la totalité de la zone de la bobine de bande (5) de la galette..

2. Emballage selon la revendication 1, caractérisé en ce que l'angle de cône α est de valeur telle que, lorsque l'emballage est rétracté avec la feuille rétractable (4), les faces intérieures (2) des palettes en matière plastique appuient régulièrement sur l'ensemble de la zone de la bobine de bande (5) située sur la galette extérieure.

3. Emballage selon les revendications 1 et 2, caractérisé en ce que l'angle de cône α est de l'ordre de grandeur de 1 à 10 degrés.

4. Emballage selon les revendications 1 à 3, caractérisé en ce que les axes de bobinage (6) sont des axes empilables protégés contre toute rotation provenant de déformations axiale exercées des deux côtés.

5. Emballage selon les revendications 1 à 4, caractérisé en ce que les palettes en matière plastique (1) sont en polystyrène alvéolaire et réalisées sur leur face extérieur avec des raidissements (7) en forme de rayons, entre lesquels se trouvent des cavités (8).
